# EUROPEAN PATENT SPECIFICATION

(11) **EP 4 238 614 B1**
(45) Date of publication and mention of the grant of the patent: **15.10.2025**
(21) Application number: 23158677.7
(22) Date of filing: 27.02.2023
(51) Int. Cl.: A62C 3/07, A62C 3/16, H01M 10/625, F16L 37/00, F16L 37/107, F16L 37/28

(54) **SAFETY SYSTEM FOR VEHICLE PROPULSION BATTERY PACK**
SICHERHEITSSYTEM FÜR EINES ANTRIEBSBATTERIEPAKETEN EINES FAHRZEUGS
SYSTÈME DE SÉCURITÉ POUR LES BLOCS DE BATTERIE DE PROPULSION D'UN VÉHICULE

(30) Priority: 02.03.2022 IT 202200003878
(43) Date of publication of application: 06.09.2023
(73) Proprietor: Iveco S.p.A., 10156 Torino (IT)
(72) Inventor: AIMO BOOT, Marco, 10156 Torino (IT)
(74) Representative: Fiume, Orazio

(56) References cited:
- EP-A1- 3 909 650
- FR-A1- 2 991 258
- FR-A1- 3 002 910
- US-A1- 2018 289 996

## Description

### Field of the invention

The present invention relates to the field of safety systems in the field of vehicular propulsion battery packs. In particular, the present invention relates generally to the introduction of extinguishing liquids into an electric vehicle battery casing, and more particularly to a fill door access system which allows the introduction of extinguishing liquid only when necessary.

### State of the art

The battery packs used with electric vehicles store large amounts of energy in a small space, resulting in high energy densities.

The battery case is often equipped with safety systems to improve safety and stability under abnormal operating conditions.

The phenomena that must be considered abnormal are the so-called thermal runaway. Phenomenon in which a large amount of heat and gas develops.

Such conditions can be caused by failure of a battery cell, such as overtemperature or overload events, or by mechanical damage, such as a collision that damages, by shorting, at least one of the cells in the battery pack.

The heat released by the short can be quite large, depending on many factors, including the amount of energy converted to heat and the location of the short, can start a chain reaction.

When the temperature that develops exceeds a predetermined threshold which is approximately 200°C in relation to the construction characteristics of the cells, an irreversible chain reaction is triggered which leads to overheating and failure of the cells adjacent to the initially damaged one, releasing heat which, in turn, propagates throughout the battery pack.

As a rule, the housing is equipped with a pressure relief valve which allows the evacuation of any gases released during the thermal drift, preventing the housing from exploding.

The housing also provides environmental protection from water/moisture ingress. To do this, the housing is designed as a sealed, rugged, metallic, thermoplastic or fiber-reinforced polymer enclosure.

It is difficult to control the chain reaction by injecting inert gases into the housing, because oxygen is released from some cathode materials of the battery during these reactions.

The most efficient way to limit the effects of a thermal runaway is to remove the heat by injecting extinguishing liquid into the housing.

However, this means having to connect an external source of extinguishing liquid to the battery pack.

FR2991258B1 discloses a battery compartment comprising a pipe that emerges towards outside allowing entry of water under pressure in the compartment. The pipe comprises a normally closed obstruction system configured to melt by open automatically under fire conditions in the compartment.

It can be tricky to connect a hydraulic line to a vehicle's battery compartment when a thermal runaway has already started.

When considering an electric vehicle charging station or simply a room where an electric vehicle is stored, any delay in extinguishing a thermal runaway in the early stages of development can turn into a catastrophe, as the fire can spread to adjacent vehicles and/or infrastructure. In addition, normal fire-fighting systems may not be sufficient to deal with similar circumstances, in which the so-called fire load is very high as in the case of commercial or industrial electric vehicles, which are equipped with significant energy storage.

Unless specifically excluded in the detailed description that follows, what is described in this chapter is to be considered as an integral part of the detailed description.

### Summary of the invention

The object of the present invention is to provide the housing with a safety system which allows easier and more immediate intervention in the event of a thermal runaway of a cell of a battery pack of an electric or electrified vehicle.

The basic idea of the invention is to provide the battery pack housing with a hydraulic conduit equipped with a fusible septum, so that when the septum melts due to a thermal runaway, the hydraulic conduit is in communication with the compartment inside the housing, in which the hydraulic line is equipped with a fitting compatible with a quick-coupling hydraulic system.

There are different types of quick couplings, all of which are characterized by the fact that they allow immediate connection of two connectors without the use of tools and without long and laborious operations.

For example, Storz connectors are considered quick couplings because with a simple combination of movements it is possible to make a hydraulic connection.

According to the invention, couplings are implemented that define a system called "water-stop", i.e. configured to interrupt the flow of liquid when the two complementary connectors are separated. An example of such connectors is in WO9919657.

According to the invention, the connector connected to the battery pack housing is compatible with a water-stop system.

In a plug-socket system it is evident that the shut-off valve is mounted inside one of the two fittings, typically on the female fitting, however, the male fitting, while not equipped with the valve, must not only be configured to engage the female fitting, making a hydraulic connection, but also to release the valve contained therein. Therefore, the concept of compatibility implies that the fitting must be such as to make a hydraulic connection and simultaneously release the valve present in one of the two fittings.

Although the fitting associated with the housing is not itself equipped with a valve, it is compatible with a fitting equipped with a valve to create a water-stop system.

Advantageously, the vehicle can be rapidly associated with a source of extinguishing liquid without having to perform laborious manoeuvres, especially in emergency conditions. Thanks to the present invention, it is possible to keep any parked vehicle, for example during a battery recharging procedure, permanently connected to a source of extinguishing liquid and/or coolant.

Advantageously, the water-stop system defined between the battery pack housing and the source of extinguishing liquid and/or coolant makes mutual interconnection even faster, favouring the safety of electric or electrified vehicles. According to a further preferred aspect of the invention, the duct is made in such a way as to define a separation between the fusible septum and the extinguishing liquid. According to a further aspect of the invention, the device is equipped with a valve able to open automatically when a flow of extinguishing liquid and/or coolant towards the housing is interrupted, allowing to carry out filling and emptying cycles of the housing, without having to realize a second opening.

Advantageously, thanks to this separation, the melting temperature of the fusible septum does not depend on the physical-chemical characteristics of the extinguishing liquid.

The invention is defined in claim 1.

The dependent claims describe preferred variants of the invention, forming an integral part of the present description.

### Brief description of the figures

Further objects and advantages of the present invention will become clear from the detailed description that follows of an embodiment of the same (and of its variants) and from the annexed drawings given for purely explanatory and non-limiting purposes, in which:
Figs. 1 - 3 show an example of a hydraulic pipe equipped with a fitting compatible with a quick couplingion hydraulic system, respectively according to a perspective view, a side view and a view according to a longitudinal section;
Fig. 4 shows a perspective view of a second variant of the invention;
in Figs. 5 and 6 a further variation of the invention is shown according to a perspective and lateral view respectively, while in figures 7a, 7b and 7c three possible variations are shown which according to a longitudinal section of the device, which, externally, share the same shape shown in Figs 5 and 6;
Fig. 8 shows a rear perspective view of one of the variants of the device;
Fig. 9 shows a longitudinal section of another preferred variant of the invention;
Fig. 10 shows the application of the device of the present invention, applied to a housing for a battery pack;
Figs. 11 and 12 show further preferred variants of the invention according to a longitudinal section and a perspective view.

The same reference numbers and letters in the figures identify the same elements or components or functions.

It should also be noted that the terms "first", "second", "third", "superior", "inferior" and the like may be used herein to distinguish various items. These terms do not imply a spatial, sequential, or hierarchical order for the modified items unless specifically indicated or inferred from the text.

The elements and characteristics illustrated in the various preferred embodiments, including the drawings, can be combined with each other without however departing from the scope of protection of the present application as described below.

### Detailed description

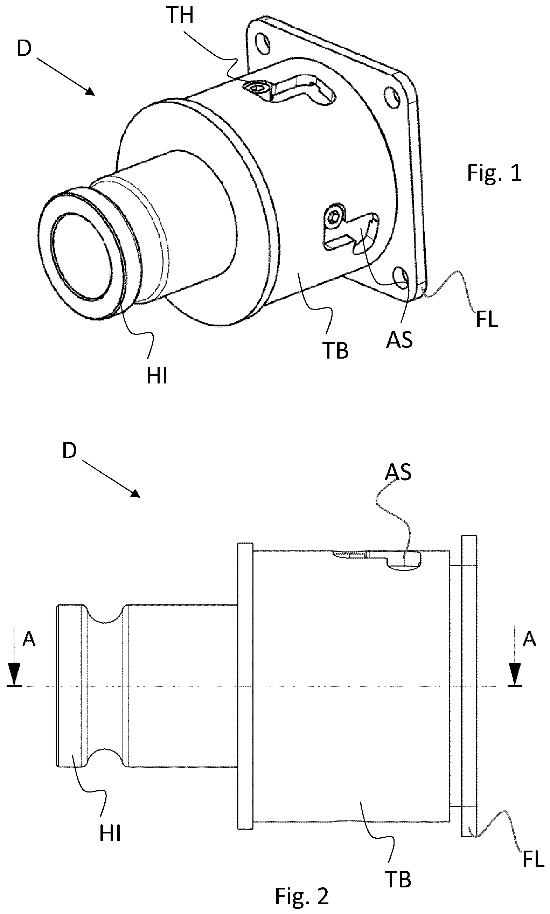

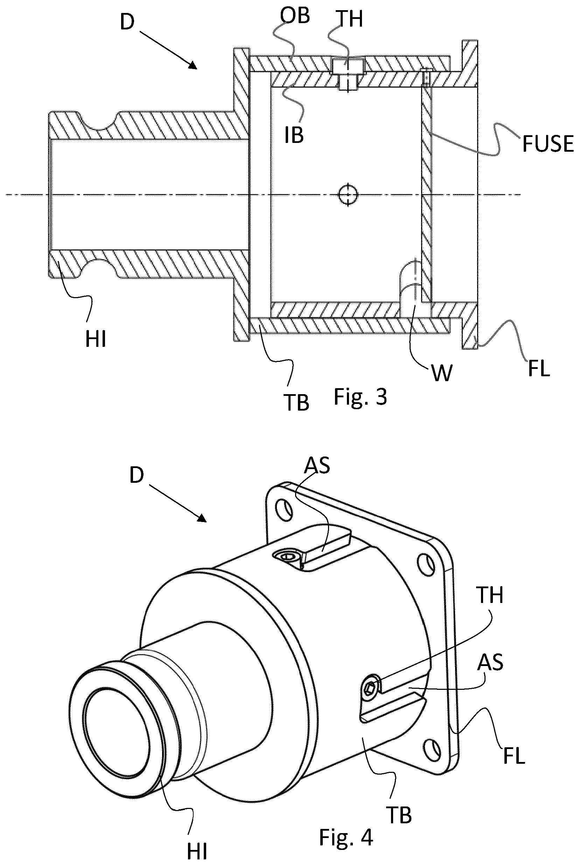

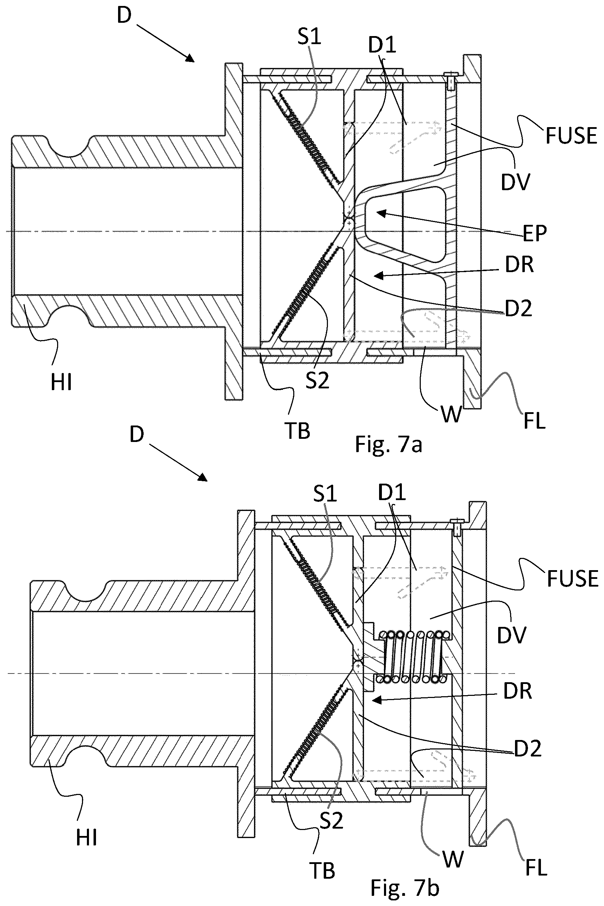

Fig. 1 shows a perspective view of a first preferred variant of the invention, while Figs. 4, 9 and 11 and Fig. 5 in combination with Figs. 7a - 7c show other variants of the invention.

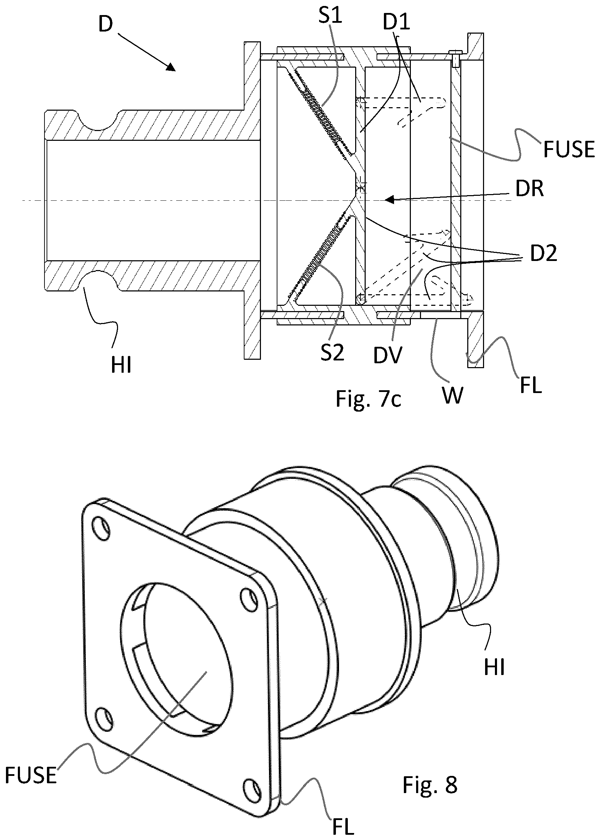

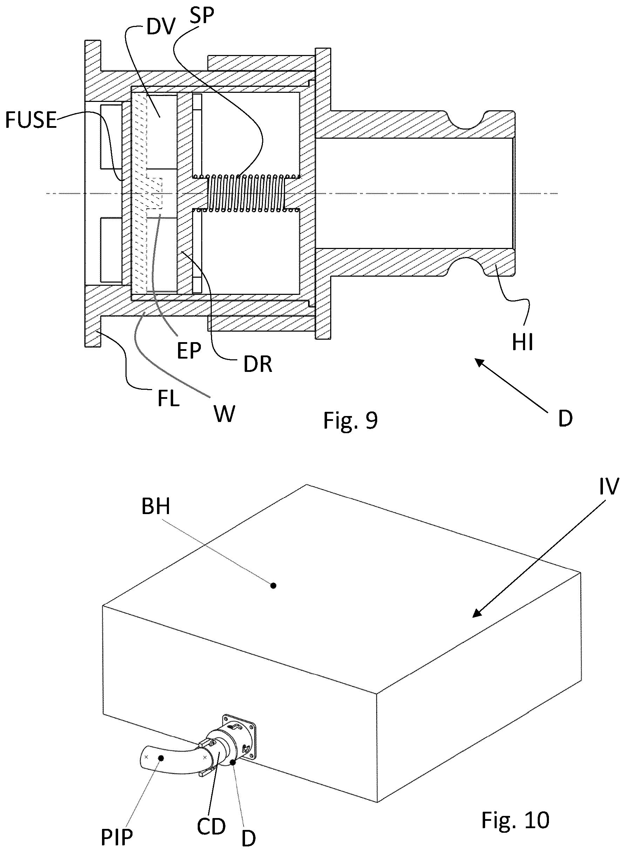

The device D comprises a tubular body TB intended to be fixed directly on a housing H of a battery pack, shown in Fig. 8, by means of a flange FL stably fixed to a first end of the tubular body. At the second end, opposite to the first, of the tubular body, the device D comprises a hydraulic fitting HI compatible with a rapid interconnection hydraulic system, schematized in Fig. 10, where a conduit PIP is shown which connects an external source of coolant and/or or extinguishing liquid to the housing, by means of the hydraulic system D, CD.

Alternatively, the tubular body is integral with the housing and therefore, the FL flange is not required.

There are different types of quick couplings, all of which are characterized by the fact that they allow immediate connection of two connectors without the use of tools and without long and laborious operations.

For example, Storz connectors are considered quick couplings, because with a simple combination of movements it is possible to make a hydraulic connection between two compatible fittings. Storz fittings are also called "sexless" as the two fittings of the interconnection system are identical to each other.

Other solutions not part of the invention, envisage, for example, having to withdraw a ring nut of the female fitting to allow the male fitting to be disengaged from the female fitting.

According to the invention, one of the fittings is equipped with a non-return valve arranged so as to open following the mutual connection of the two compatible fittings and to close following their mutual disconnection.

Equipping the rapid interconnection hydraulic system INTC with a "water stop" system is very advantageous, as it speeds up the safety of an electric or electrified vehicle. The tubular body TB comprises a fusible septum FUSE fixed perimetrically to the tubular body. This septum has the task of keeping the internal compartment IV of the housing BH of the battery pack hermetically separated from the external environment. So that, only in the event of a thermal runaway, it is possible to inject water into the housing.

With reference to Figs. 1 and 4, the tubular body TB comprises a telescopic section comprising two portions OB, IB of which an external portion OB and an internal portion IB, sliding axially and internally to the external portion. One of the two portions is operatively associated with the flange or directly with the housing and the other portion is operatively associated with the first fitting HI. The telescopic section defines a compact configuration and an extended configuration, and in which, at least in the compact configuration, the tubular body is liquid-tight between the fitting HI and the flange or housing HB.

As will be seen below, it could even be useful for the tubular body to allow, at least in the extended condition, the loss of cooling and/or extinguishing liquid.

According to the solution of Fig. 4, the external portion OB is associated with the internal portion IB of the telescopic section by means of a bayonet coupling. The external portion comprises slots or grooves, i.e. blind slots, which allow the teeth TH fixed to the internal portion to move inside the slots or grooves between a configuration of complete disengagement of the two portions and a configuration of complete engagement. As with any bayonet coupling, the engagement is obtained through a combination of movements, first axial and then rotational.

The solution of Fig. 1 differs from the solution of Fig. 4 in that it is not possible to completely disengage the two internal and external portions.

The fact of being able to completely disengage the external portion from the internal portion allows easy filling and emptying cycles of the battery compartment in order to effectively refrigerate its contents.

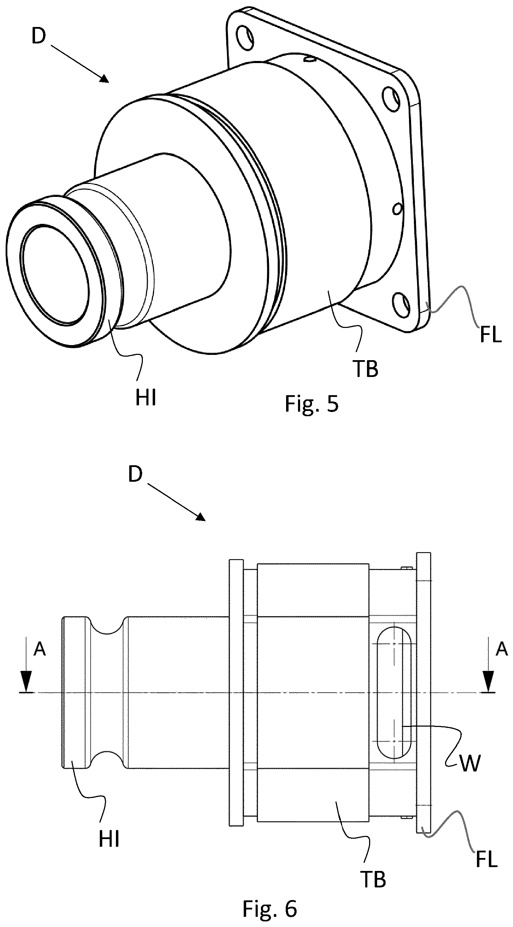

In the variant in which complete disengagement is not possible, an emptying window W is provided, made in the body of the internal portion, so that in the compact configuration, the emptying window W is completely closed, as shown in Fig. 3, vice versa, in the extended configuration, the emptying window W is completely open. An example of an emptying window is shown in Fig. 6, even if this figure refers to a different variant, described further on.

The emptying window W is arranged at an intermediate point between the fusible septum FUSE and the fitting IH. This is advantageous, as it ensures that the internal compartment IV is kept hermetically separated from the external environment, regardless of the configuration assumed by the telescopic section of the tubular body TB.

In order for the fusible septum to melt, the melting temperature must be lower than the boiling temperature of the coolant and/or extinguishing liquid.

In fact, if the housing is connected to an external source of refrigerant and/or extinguishing liquid, the liquid, in contact with the septum, prevents or slows down its melting, leading to an uncertainty of timely operation. In fact, when the melting temperature of the septum is higher than the boiling temperature of the extinguishing liquid, the septum does not melt or melts at a higher temperature than expected with a significant delay in the connection process of the source of coolant and/or extinguishing liquid with the battery compartment.

However, a septum that melts at a temperature sufficiently lower than the boiling point of the coolant and/or extinguishing liquid may not be available or may be unsuitable to meet some mechanical strength specifications. In fact, it must be taken into account that a vehicle is subject to vibrations in very different operating conditions.

Therefore, if the septum is made of a material with a melting temperature comparable to or even higher than the boiling temperature, having the coolant and/or extinguishing liquid in contact with the septum could lead to non-compliant device operation.

According to a preferred variant of the invention, see Figs. 5 and 7a, the tubular body TB comprises a door D1, D2 arranged at an intermediate point between the fusible septum FUSE and the fitting HI and arranged for
- creating a seal with the tubular body and define a dry volume DV between the door itself and the fusible septum, when the fusible septum is intact, and for
- opening, placing the tubular body TB in hydraulic communication with the compartment inside the housing H when the fusible septum is at least partially melted.

The door DR is preferably formed by two portions D1 and D2, each hinged to the tubular body, so as to open towards the internal compartment of the housing.

The protruding portion EP of the septum emerges approximately perpendicularly with respect to the surface of the septum, to contact the door DR and keep it closed until the fusible septum itself yields under the effect of the temperature.

Evidently, the pressure of the extinguishing liquid, applied to door DR, contributes to the break of the fusible septum.

Therefore, on the one hand, door DR allows the creation of a dry volume between the coolant and/or extinguishing liquid and the fusible septum, while, on the other hand, door DR contributes to the detachment of the fusible septum when it begins to yield due to a thermal runaway of the battery pack.

The variant of Fig. 7b differs from the variant of Fig. 7a, in that the emerging element EP is at least partially replaced by an elastic element, such as for example a spiral spring SP.

Fig. 7c shows a further preferred variant of the invention, arranged to produce a dry volume.

It can be seen from this figure that, there is no interference element fixed on the fusible septum. In this case, the two portions of the door DR: D1 and D2 have a different extension. In particular, the portion D2 of the door is wider than the portion D1 of the same door. In addition, the fusible septum and the door DR, as a whole, are arranged at such a distance that the portion D2 interferes with the fusible septum FUSE, as long as this is intact. In other words, the portion D2 cannot open completely due to the effect of the pressure of the extinguishing liquid and/or refrigerant.

Preferably, each of the variants 7a - 7c is equipped with an emptying window W which puts the dry volume in communication with the external environment. As anticipated above, this emptying window is useful for carrying out filling and emptying cycles of the battery compartment, increasing the effectiveness of battery cell cooling.

In the solution of figure 7c, the emptying window W is even more advantageous, as it guarantees that, even if the contact between the door D2 and the fusible septum is not perfectly sealed, the volume confined by the fusible septum, the portion D2 of the door and the tubular body never fills with cooling and/or extinguishing liquid, guaranteeing that at least a portion of the fusible septum melts at the pre-established temperature.

After the fusible septum has given way, the portion D2 of the door opens completely going to close the emptying window W, not necessarily realizing a perfect seal.

When the delivery of the coolant and/or extinguishing liquid is interrupted to carry out the filling and emptying cycles of the battery pack, the return springs S1 and S2 are arranged to return the positions D1 and D2 of the door to closing, allowing the window to emptying W to be crossed by the liquid flowing out of the housing.

Also in the solutions of Figs. 7a and 7b, the emptying window W can be arranged in such a way that, when the door DR is open, the emptying window is completely closed, while when the door DR is closed, the emptying window is completely open.

For this purpose, the door DR is brought back to close by at least one return spring S1, S2 when the pressure generated by the source of extinguishing liquid and/or coolant ceases.

This aspect is advantageous in order to be able to carry out the battery compartment filling and emptying cycles only by interrupting the flow of extinguishing liquid and/or coolant, without disconnecting the duct PIP connecting the source of extinguishing and/or coolant liquid from the device D.

It must be considered that when a thermal runaway occurs, it is highly dangerous to stand in the vicinity of the vehicle. Therefore, while the solutions of Figs. 1 and 4 require an operator to approach the vehicle, the solutions of Figs. 7a - 7c and 9, described below, do not require an operator to approach the vehicle, since, to perform emptying the battery compartment it is sufficient to remotely interrupt the flow of the coolant and/or extinguishing liquid. In fact, the emptying window opens automatically when there is no flow of coolant and/or extinguishing liquid towards the battery compartment.

Fig. 9 shows a further variant of the invention, in which the fusible septum is connected to the door by means of a spacer element EP forming a single mobile unit - door DR, fusible septum FUSE and spacer element EP -, so as to define a volume dry DV between the door and the fusible septum. This variant differs from the variants of Figs. 7a - 7c in that the door is not hinged, but slides axially like a shutter.

Also in this case, the fusible septum, melting, yields under the pressure of the extinguishing and/or cooling liquid and allows the door to advance, opening to the passage of the extinguishing and/or cooling liquid. Preferably, the door DR, moving towards the battery compartment - on the left of the figure -, closes the emptying window W. However, the interruption of the liquid flow allows the return spring SP to recall the mobile unit back, opening the emptying window W, so that the coolant and/or extinguishing liquid can flow out of the emptying window W.

Figure 10 shows a housing BH with the relative internal volume IV, adapted to house a battery pack.

The device D is fixed in a lower part of the housing, which in the figure is shown connected to a PIP duct by means of a CD fitting compatible with the HI fitting of the device.

The lower part is considered as such in relation to the operating condition of the housing, so that the cooling and/or extinguishing liquid can naturally flow out due to the gravitational force.

Preferably, the emptying window W is arranged, where present, so as to look downwards, so as to facilitate the emptying of the housing when the delivery of the coolant and/or extinguishing liquid is interrupted.

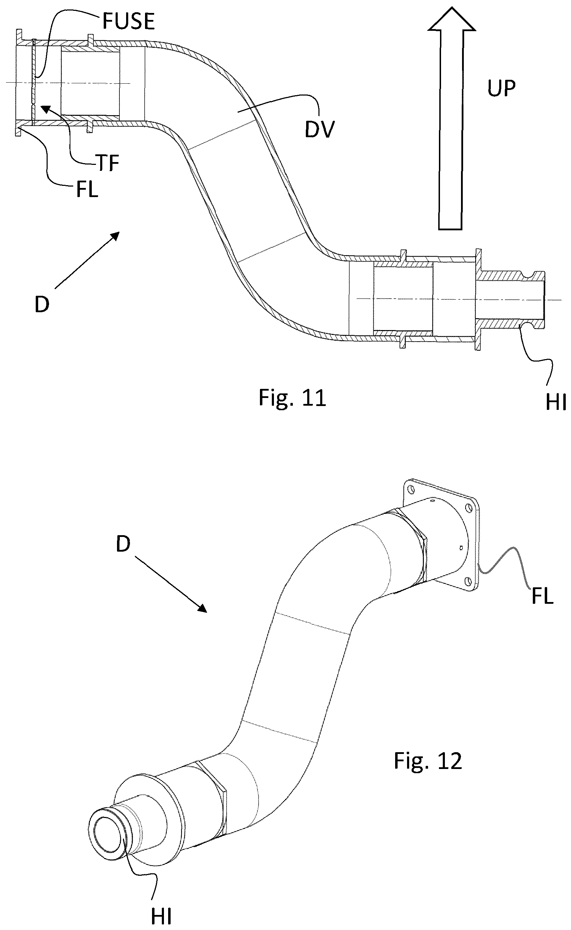

Therefore, considering the housing of the battery pack in operating configuration, Figs. 11 and 12 show a further preferred variant of the invention. This is the only variant without the emptying window.

Here the tubular body TB is S-shaped and the fitting HI is in a lower position than the fusible septum FUSE. This means that when the PIP duct is hydraulically connected to the device D, air remains trapped between the HI fitting and the fusible septum FUSE, forming a separation wall with the front of the coolant and/or extinguishing liquid.

This variant provides, among other things, also an invitation TF to rupture which facilitates the rupture of the fusible septum from below.

It should be noted that the housings of the vehicle battery packs are equipped with an overpressure valve (not shown) arranged to allow the evacuation of gases that may be released during a thermal runaway of at least one cell of the battery pack. When coolant is injected the pressure relief valve opens, allowing coolant and/or extinguishing liquid to enter the internal compartment IV of the housing.

Variants of the non-limiting example described are possible, without however departing from the scope of protection of the present invention, including all equivalent embodiments for a person skilled in the art, to the contents of the claims.

From the description given above, the person skilled in the art is capable of realizing the object of the invention without introducing further constructive details.

## Claims

1. Safety system for vehicular propulsion battery pack, the system including
- a device (D) for hydraulic connection of a housing (H) of a battery pack, the device (D) comprising a tubular body (TB) equipped with a fusible septum (FUSE), so that, upon exceeding a predetermined temperature threshold, the septum is arranged to melt, putting the tubular body (TB) in hydraulic communication with an internal compartment (IV) of the housing (H), wherein the tubular body (TB) is equipped with a first fitting (HI);
- an external duct (PIP) connected to an external source of extinguishing liquid and/or refrigerant, wherein the external duct comprises a second fitting (CD) complementary to the first fitting (HI),
the safety system being **characterized in that** said first and second fittings define a rapid hydraulic connection system and **in that** the quick hydraulic connection system is of the water-stop type.

2. System according to claim 1, wherein said first and second fittings are sexless.

3. System according to claim 1, wherein said first fitting is male and said second fitting is female.

4. System according to claim 1, wherein a check valve is associated with the second fitting and arranged to open only when the second fitting is operatively connected to the first fitting.

5. System according to any one of the preceding claims 1-4, wherein said device (D) is integral with said housing or fixable by means of a flange (FL) integral with the tubular body.

6. System according to claim 5, wherein the tubular body (TB) comprises a telescopic section comprising two portions (OB, IB) of which an external portion (OB) and an internal portion (IB) sliding axially and inside the external portion and wherein one of said two portions is operatively associated with said flange or said housing and the other portion is operatively associated with the first fitting (HI) and wherein the telescopic section defines a compact configuration and an extended configuration, and wherein, at least in said compact configuration, the tubular body is liquid-tight between said first fitting and said flange.

7. System according to claim 6, wherein the outer portion is associated with the inner portion by means of a bayonet coupling.

8. System according to claim 7, wherein the bayonet coupling is made in such a way as to allow the disengagement of the external portion from the internal portion.

9. System according to claim 7, wherein the bayonet coupling is made in such a way as to allow said compact configuration and said extended configuration, without allowing the disengagement of the external portion from the internal portion.

10. System according to claim 9, wherein the inner portion (IB) comprises a through emptying window (W) arranged in such a position as to be closed when the telescopic section is in compact configuration.

11. System according to claim 10, wherein said emptying window is arranged at an intermediate point comprised between the fusible septum (FUSE) and the first fitting (IH).

12. System according to claim 5, wherein said tubular body further comprises a door (D; D1, D2) arranged at an intermediate point between said fusible septum and said first fitting and arranged to
- create a seal with the tubular body and define a dry volume (DV) between the door and the fusible septum, when the fusible septum is intact, and to
- open, placing the tubular body (TB) in hydraulic communication with the internal compartment (IV) of the housing (H), when the fusible septum is at least partially melted.

13. System according to claim 12, wherein the door is arranged to open moving towards the internal compartment of the housing (H), and wherein the fusible septum comprises an emerging portion (EP) so as to contact the door while keeping it in closing and liquid-tight position, interfering with an opening of the door as long as the septum is intact.

14. System according to claim 12, wherein the door is arranged to open moving towards the internal compartment of the housing (H), and wherein the fusible septum is arranged to support a closing spring (LS) so as to contact the door keeping it in the closed and liquid-tight position, so as to interfere with the opening of the door as long as the septum is intact.

15. System according to claim 12, wherein the door is arranged to open moving towards the internal compartment of the housing (H), and wherein said door and said fusible septum are mutually spaced and wherein the door comprises a return spring (S1, S2) arranged to keep the door in the normally closed position and wherein the door is configured to contact the fusible (FUSE), when the duct is pressurized with a liquid, so as to form a seal with the septum, defining said dry volume (DV) and wherein said tubular body (TB) comprises an emptying window (W) communicating with the external environment.

16. System according to any one of claims 13 to 15, wherein said tubular body comprises a through emptying window (W) arranged at an intermediate point between said door and said fusible septum and wherein said door is arranged to close said emptying window (W) when it opens due to a flow of coolant and/or extinguishing liquid and said return spring is arranged to bring said door closed when said flow of coolant and/or extinguishing liquid is interrupted.

17. System according to claim 12, wherein the fusible septum is connected to the door by means of a spacer element (EP) forming a single movable assembly, so as to define a dry volume (DV) between the door and the fusible septum, and wherein the tubular body is shaped so that when the fusible septum is melted, the mobile unit is able to slide towards the housing (H) putting the first fitting (HI) in hydraulic communication with the internal compartment (IV) of the housing and wherein a retraction spring (SP) is arranged to retract, towards the first fitting, the single movable assembly.

18. System according to any one of claims 1 to 5, wherein said tubular body is S-shaped.

19. Housing (H) for a vehicular propulsion battery pack comprising a device (D) for the hydraulic connection of the housing (H) to an external source of extinguishing liquid and/or refrigerant, according to any one of claims 1 to 18.

20. Housing (H) for a vehicular propulsion battery pack comprising a device (D) for the hydraulic connection of the housing (H) to an external source of extinguishing liquid and/or refrigerant, according to claim 20, wherein, in operating conditions the first fitting is in a lower position than the fusible septum (FUSE).

21. Commercial or industrial vehicle comprising a housing for a vehicular propulsion battery pack according to claim 19 or 20.

22. Method of implementing a safety measure during a prolonged stop of an electric or electrified vehicle according to claim 21, comprising a step of connecting the housing (H) of the battery pack with an external source of extinguishing and/or refrigerant liquid.

## Patentansprüche

1. Sicherheitssystem für ein Antriebsbatteriepaket eines Fahrzeugs, umfassend
- eine Vorrichtung (D) zur hydraulischen Verbindung eines Batteriepakets des Gehäuses (H), wobei die Vorrichtung (D) einen röhrenförmigen Körper (TB) mit einem schmelzbaren Septum (FUSE) umfasst, so dass bei Überschreiten einer vorgegebenen Temperaturschwelle ist das Septum so angeordnet, dass es schmilzt und den röhrenförmigen Körper (TB) hydraulisch mit einem Innenkompartiment (IV) des Gehäuses (H) verbindet, wobei der röhrenförmige Körper (TB) mit einem ersten Anschlussstück (HI) ausgestattet ist;
- ein externer Kanal (PIP) der mit einer externen Lösch- und/oder Kühlflüssigkeitsquelle verbunden ist, wobei der externe Kanal einen zweiten Anschlussstück (CD) umfasst, das komplementär zum ersten Anschlussstück ist,
wobei das Sicherheitssystem ist **dadurch gekennzeichnet, dass** die ersten und zweiten Anschlussstücke ein schnelles hydraulisches Verbindungssystem und dass das hydraulische schnelle Verbindungsystem vom Typ "Wasserstopp" ist.

2. System nach Anspruch 1, wobei das erste und das zweite Anschlussstück geschlechtslos sind.

3. System nach Anspruch 1, wobei das erste Anschlussstück männlich und das zweite Anschlussstück weiblich ist.

4. System nach Anspruch 1, wobei dem zweiten Anschlussstück ein Rückschlagventil zugeordnet ist, das nur öffnet, wenn das zweite Anschlussstück mit dem ersten Anschlussstück operativ verbunden ist.

5. System nach einem der vorhergehenden Ansprüche 1 bis 4, wobei die Vorrichtung (D) mit dem Gehäuse integriert oder mittels eines mit dem röhrenförmigen Körper integrierten Flansches (FL) befestigbar ist.

6. System nach Anspruch 5, wobei der röhrenförmige Körper (TB) einen Teleskopabschnitt mit zwei Abschnitten (OB, IB) aufweist, von denen ein äußerer Abschnitt (OB) und ein innerer Abschnitt (IB) axial und im äußeren Abschnitt gleiten und wobei einer der beiden Abschnitte mit dem Flansch oder dem Gehäuse integriert und der andere mit dem ersten Anschlussstück (HI) operativ verbunden ist und wobei der Teleskopabschnitt eine kompakte Konfiguration und eine ausgefahrene Konfiguration definiert, und wobei, mindestens in der kompakten Konfiguration, ist der röhrenförmige Körper flüssigkeitsdicht zwischen dem ersten Anschlussstück und dem Flansch angeordnet.

7. System nach Anspruch 6, wobei der äußere Abschnitt mit dem inneren Abschnitt mittels einer Bajonettverbindung verbunden ist.

8. System nach Anspruch 7, wobei die Bajonettverbindung so konfiguriert ist, dass sie die Entkopplung des äußeren Abschnitts aus dem inneren Abschnitt ermöglicht.

9. System nach Anspruch 7, wobei die Bajonettverbindung so konfiguriert ist, dass sie die kompakte Konfiguration und die ausgedehnte Konfiguration ermöglicht, so dass sie die Entkopplung des äußeren Abschnitts aus dem inneren Abschnitt ermöglicht.

10. System nach Anspruch 9, wobei der innere Abschnitt (IB) ein Durchgangsentleerungsfenster (W) aufweist, das in einer solchen Position angeordnet ist, dass es geschlossen ist, wenn sich der Teleskopabschnitt in einer kompakten Position befindet.

11. System nach Anspruch 10, wobei das Entleerungsfenster bei einem Zwischenpunkt angeordnet ist, der zwischen dem Schmelzseptum und dem ersten Anschlussstück (ICH) liegt.

12. System nach Anspruch 5, wobei der röhrenförmige Körper weiter eine Tür (D; D1, D2) umfasst, die bei einem Zwischenpunkt zwischen dem Schmelzseptum und dem ersten Anschlussstück angeordnet ist und ist so angeordnet,
- dass sie bei intaktem Schmelzseptum eine Abdichtung mit dem röhrenförmigen Körper bildet und ein Trockenvolumen (DV) zwischen der Tür und dem Schmelzseptum definiert, und
- dass bei zumindest teilweise geschmolzenem Schmelzseptum öffnet sich die Tür und stellt so die hydraulische Verbindung zwischen dem röhrenförmigen Körper (TB) und dem Innenraum (IV) des Gehäuses (H) her, wenn das Schmelzseptum zumindest teilweise geschmolzen ist.

13. System nach Anspruch 12, wobei sich die Tür in Richtung des inneren Kompartiments des Gehäuses (H) öffnet, und wobei das Schmelzseptum einen austretenden Abschnitt (EP) umfasst, der die Tür berührt und sie in geschlossener und flüssigkeitsdichter Position hält, wodurch ein Öffnen der Tür verhindert wird, solange das Septum intakt ist.

14. System nach Anspruch 12, wobei sich die Tür in Richtung des inneren Kompartiments des Gehäuses (H) öffnet und wobei das Schmelzseptum eine Schließfeder (LS) trägt, die die Tür berührt und sie in geschlossener und flüssigkeitsdichter Position hält, wodurch ein Öffnen der Tür verhindert wird, solange das Septum intakt ist.

15. System nach Anspruch 12, wobei die Tür so angeordnet ist, dass sie sich in Richtung des inneren Kompartiments des Gehäuses (H) öffnet, und wobei die Tür und das Schmelzseptum voneinander beabstandet sind und wobei die Tür eine Rückstellfeder (S1, S2) aufweist, die so angeordnet ist, dass sie die Tür in der normalerweise geschlossenen Position hält und wobei die Tür so konfiguriert ist, dass sie die Sicherung (FUSE) berührt, wenn der Kanal mit einer Flüssigkeit unter Druck steht, um eine Abdichtung mit dem Septum zu bilden und das Trockenvolumen (DV) zu definieren und wobei der röhrenförmige Körper (TB) ein Entleerungsfenster (W) aufweist, das mit der Außenumgebung kommuniziert.

16. System nach einem der Ansprüche 13 bis 15, wobei der röhrenförmige Körper ein durchgehendes Entleerungsfenster (W) aufweist, das an einem Zwischenpunkt zwischen der Tür und dem Schmelzseptum angeordnet ist, und wobei die Tür so angeordnet ist, dass sie das Entleerungsfenster (W) schließt, wenn sie sich aufgrund eines Kühlmittel- und/oder Löschflüssigkeitsstroms öffnet, und wobei die Rückstellfeder so angeordnet ist, dass sie die Tür schließt, wenn der Kühlmittel- und/oder Löschflüssigkeitsstrom unterbrochen wird.

17. System nach Anspruch 12, wobei das Schmelzseptum durch ein Abstandselement (EP) mit der Tür verbunden ist, das eine einzige bewegliche Baugruppe bildet, um ein Trockenvolumen (DV) zwischen der Tür und dem Schmelzseptum zu definieren, und wobei der röhrenförmige Körper so geformt ist, dass die bewegliche Baugruppe beim Schmelzen des Schmelzseptums in Richtung des Gehäuses (H) gleiten kann, wodurch das erste Anschlussstück (HI) in hydraulische Verbindung mit dem inneren Kompartiment (IV) des Gehäuses gebracht wird, und wobei eine Rückstellfeder (SP) so angeordnet ist, dass sie die einzige bewegliche Baugruppe in Richtung des ersten Anschlussstücks zurückzieht.

18. System nach einem der Ansprüche 1 bis 5, wobei der röhrenförmige Körper S-förmig ist.

19. Gehäuse (H) für ein Antriebsbatteriepaket eines Fahrzeugs, umfassend eine Vorrichtung (D) zum hydraulischen Verbinden des Gehäuses (H) mit einer externen Lösch- und/oder Kühlflüssigkeitsquelle nach einem der Ansprüche 1 bis 18.

20. Gehäuse (H) für ein Antriebsbatteriepaket eines Fahrzeuges, umfassend eine Vorrichtung (D) zum hydraulischen Verbinden des Gehäuses (H) mit einer externen Lösch- und/oder Kühlflüssigkeitsquelle, gemäß Anspruch 20, wobei sich das erste Anschlussstück operativ in einer unteren Position befindet, als das Schmelzseptum (FUSE).

21. Nutz-oder Industriefahrzeug mit einem Gehäuse für ein Antriebsbatteriepaket eines Fahrzeugs gemäß Anspruch 19 oder 20.

22. Verfahren zur Umsetzung einer Sicherheitsmaßnahme bei einem längeren Stillstand eines Elektrofahrzeugs oder elektrifizierten Fahrzeugs gemäß Anspruch 21, umfassend einen Schritt des Verbindens des Gehäuses (H) des Batteriepakets mit einer externen Lösch- und/oder Kühlflüssigkeitsquelle.

## Revendications

1. Système de sécurité pour un bloc de batterie de propulsion de véhicule, comprenant
- un dispositif (D) de connexion hydraulique à un boîtier (H) d'un bloc de batterie, le dispositif (D) comprenant un corps tubulaire (TB) équipé d'un septum fusible (FUSE), de telle sorte que, lorsqu'un seuil de température prédéterminé est dépassé, le septum est arrangé pour fondre, mettant le corps tubulaire (TB) en communication hydraulique avec un compartiment interne (IV) du boîtier (H), dans lequel le corps tubulaire (TB) est équipé d'un premier raccord (HI) ;
- un conduit externe (PIP) connecté à une source externe de liquide extincteur et/ou réfrigérant, dans lequel le conduit externe comprend un deuxième raccord (CD) complémentaire au premier raccord (HI),
le système de sécurité étant **caractérisé en ce que** lesdits premier et deuxième raccord définissent un système de connexion hydraulique rapide et que le système de connexion hydraulique rapide est de type « water-stop ».

2. Système selon la revendication 1, dans lequel lesdits premier et deuxième raccord sont asexués.

3. Système selon la revendication 1, dans lequel ledit premier raccord est mâle et ledit deuxième raccord est femelle.

4. Système selon la revendication 1, dans lequel un clapet de contrôle est associé au deuxième raccord et est arrangé pour s'ouvrir uniquement lorsque le deuxième raccord est connecté de manière opérationnelle au premier raccord.

5. Système selon l'une quelconque des revendications précédentes 1 à 4, dans lequel ledit dispositif (D) est solidaire dudit boîtier ou peut être fixé au moyen d'une bride (FL) solidaire du corps tubulaire.

6. Système selon la revendication 5, dans lequel le corps tubulaire (TB) comprend une section télescopique composée de deux parties (OB, IB) dont une partie externe (OB) et une partie interne (IB) coulissent axialement et à l'intérieur de la partie externe, et dans lequel l'une de ces deux parties est associée de manière opérationnelle à ladite bride ou audit boîtier, et l'autre partie est associée de manière opérationnelle au premier raccord (HI), et dans lequel la section télescopique définit une configuration compacte et une configuration étendue, et dans lequel, au moins dans ladite configuration compacte, le corps tubulaire est étanche aux liquides entre ledit premier raccord et ladite bride.

7. Système selon la revendication 6, dans lequel la partie externe est associée à la partie interne par un accouplement à baïonnette.

8. Système selon la revendication 7, dans lequel l'accouplement à baïonnette est formé de telle sorte, qu'il permet le désengagement de la partie externe de la partie interne.

9. Système selon la revendication 7, dans lequel l'accouplement à baïonnette est formé de telle sorte qu'il permet ladite configuration compacte et ladite configuration étendue, sans permettre le désengagement de la partie externe de la partie interne.

10. Système selon la revendication 9, dans lequel la partie interne (IB) comprend une fenêtre de vidange traversante (W) disposée dans une position apte à être fermée lorsque la partie télescopique est en configuration compacte.

11. Système selon la revendication 10, dans lequel ladite fenêtre de vidange est disposée à un point intermédiaire compris entre le septum fusible (FUSE) et le premier raccord (IH).

12. Système selon la revendication 5, dans lequel ledit corps tubulaire comprend en outre une porte (DR ; DI, D2) disposée à un point intermédiaire entre ledit septum fusible et ledit premier raccord et disposée pour
- créer une étanchéité avec le corps tubulaire et définir un volume sec (DV) entre la porte et le septum fusible, lorsque le septum fusible est intact, et pour
- s'ouvrir, mettant le corps tubulaire (TB) en communication hydraulique avec le compartiment interne (IV) du boîtier (H), lorsque le septum fusible est au moins partiellement fondu.

13. Système selon la revendication 12, dans lequel la porte est disposée pour s'ouvrir en se déplaçant vers le compartiment interne du boîtier (H), et dans lequel le septum fusible comprend une partie émergente (EP) de manière à entrer en contact avec la porte tout en la maintenant en position fermée et étanche aux liquides, interférant avec une ouverture de la porte tant que le septum est intact.

14. Système selon la revendication 12, dans lequel la porte est disposée pour s'ouvrir en se déplaçant vers le compartiment interne du boîtier (H), et dans lequel le septum fusible est disposé pour supporter un ressort de fermeture (LS) de manière à entrer en contact avec la porte tout en la maintenant en position fermée et étanche aux liquides, interférant avec l'ouverture de la porte tant que le septum est intact.

15. Système selon la revendication 12, dans lequel la porte est disposée pour s'ouvrir en se déplaçant vers le compartiment interne du boîtier (H), et dans lequel ladite porte et ledit septum fusible sont mutuellement espacés et dans lequel la porte comprend un ressort de rappel (SI, S2) disposé pour maintenir la porte dans la position normalement fermée et dans lequel la porte est configurée pour entrer en contact avec le fusible (FUSE), lorsque le conduit est pressurisé par un liquide, de manière à former un joint avec le septum, définissant ledit volume sec (DV) et dans lequel ledit corps tubulaire (TB) comprend une fenêtre de vidange (W) communiquant avec l'environnement extérieur.

16. Système selon l'une quelconque des revendications 13 à 15, dans lequel ledit corps tubulaire comprend une fenêtre de vidange traversante (W) disposée en un point intermédiaire entre ladite porte et ledit septum fusible et dans lequel ladite porte est disposée pour fermer ladite fenêtre de vidange (W) quand elle s'ouvre à cause d0un flux d'un liquide réfrigérant et/ou extincteur et ledit ressort de rappel est disposé pour fermer ladite porte lorsque ledit flux de liquide réfrigérant et/ou extincteur est interrompu.

17. Système selon la revendication 12, dans lequel le septum fusible est connecté à la porte par un élément d'espacement (EP) formant un ensemble mobile unique, de manière à définir un volume sec (DV) entre la porte et le septum fusible, et dans lequel le corps tubulaire est formé de telle sorte que, lorsque le septum fusible est fondu, l'ensemble mobile puisse coulisser vers le boîtier (H), mettant le premier raccord (HI) en communication hydraulique avec le compartiment interne (IV) du boîtier et dans lequel un ressort de rappel (SP) est disposé pour rétracter, vers le premier raccord, l'ensemble mobile unique.

18. Système selon l'une quelconque des revendications 1 à 5, dans lequel ledit corps tubulaire est en forme de S.

19. Boîtier (H) pour un bloc de batterie de propulsion de véhicule comprenant un dispositif (D) pour la connexion hydraulique du boîtier (H) à une source externe de liquide extincteur et/ou réfrigérant, selon l'une quelconque des revendications 1 à 18.

20. Boîtier (H) pour un bloc de batterie de propulsion de véhicule comprenant un dispositif (D) pour la connexion hydraulique du boîtier (H) à une source externe de liquide extincteur et/ou réfrigérant, selon la revendications 20, dans lequel, dans des conditions opérationnelles le premier raccord est en une position inférieure par rapport au septum fusibile (FUSE) .

21. Véhicule utilitaire ou industriel comprenant un boîtier pour un bloc de batterie de propulsion de véhicule selon la revendication 19 ou 20.

22. Procédé de mise en œuvre d'une mesure de sécurité lors d'un arrêt prolongé d'un véhicule électrique ou électrifié selon la revendication 21, comprenant une étape de connexion du boîtier (H) du bloc de batterie avec une source externe de liquide extincteur et/ou réfrigérant.
